# EUROPEAN PATENT APPLICATION

(11) **EP 2 378 757 A1**
(43) Date of publication of application: **19.10.2011**
(21) Application number: 10290207.9
(22) Date of filing: 16.04.2010
(51) Int. Cl.: H04M 3/533, H04M 1/725

(54) **System and user terminal for user friendly communication**

(71) Applicant: Afone, 49100 Angers (FR)
(72) Inventor: Fournier, Philip, 49100 Angers (FR); Horlait, Eric, 75019 Paris (FR)
(74) Representative: Thinat, Michel

(57) **Abstract**

For user friendly communication, the system comprises:
- a mobile telephony network (2);
- a service terminal (4), which is connected to the mobile telephony network; and
- at least one user terminal (1, 6, 7, 8) arranged to be connected with and only with the service terminal (4) through the mobile telephony network.

## Description

The present invention relates generally to the field of portable electronic devices.

The high level of integration of electronic circuits combined with increasing possibilities of telecommunication provides a huge amount of available information and connectivity.

But unfortunately, this overload of information and connectivity involves complexity, which consumes time and attention of a user for making use in an easy way of the possibilities provided by the technology without being lost.

Elaborate interfaces have been designed for helping the user to navigate in the deep-see of communication without overburden him with a huge quantity of buttons, selectors, menus and submenus.

International publication number W02007/079425 discloses a method of selecting a displayed virtual object amongst others for performing actions on it.

A need of easier use remains for users who do not want or who cannot navigate a certain time in a virtual world before having an effect in the real world. In many cases of the real life, an easy and immediate communication is useful.

The present invention provides a system for user friendly communication, comprising a mobile telephony network, a service terminal, which is connected to the mobile telephony network, and at least one user terminal arranged to be connected with and only with the service terminal through the mobile telephony network.

Advantageously, at least one first user terminal comprises an input for receiving sound and an electronic circuit for transmitting a short oral message to the service terminal.

Particularly, the service terminal is arranged to be connected to any one of many user terminals of the system and comprises a program for transmitting the short oral message to at least one second user terminal pertaining to a group including the first user terminal.

More particularly, the first and/or the second user terminal comprise a local memory for storing the oral message.

Preferably, the first and/or the second user terminal has a loudspeaker at disposal for playing the oral message.

Particularly also, the service terminal is arranged to be connected to a call centre for a call centre agent to handle the short oral message.

More particularly, the service terminal comprises a central memory storing a data structure indexed by an identifier of the user terminal wherefrom the short oral message is received.

Preferably, the data structure comprises a profile associated with at least one user of the user terminal.

Advantageously also, the user terminal comprises an input for storing or receiving a data file and an electronic circuit for transmitting the data file to the service terminal.

Particularly, the user terminal comprises a local memory for storing the data file. In some cases, only a part of the data file can be locally stored.

More particularly, the electronic circuit is programmed for automatically transmitting the data file in a message to the service terminal after storing the data file in the local memory and the service terminal comprises a central memory for storing the data file in association with the user terminal.

In a preferred embodiment, the system comprises a communication device including a link to the service terminal and a dialog interface for allowing a user to access and/or to modify data relating to the user terminal in the service terminal.

The present invention provides also a user terminal to be used in a system comprising a mobile telephony network and a service terminal, wherein the user terminal comprises a unique destination address, which relates to the service terminal, and the user terminal is internally wired to establish a connection through the mobile telephony network by using said and only said unique destination address.

Particularly, the user terminal comprises a sensor, which triggers the connection when the sensor detects a signal.

Particularly also, the user terminal comprises a screen to display information in relation with a content or a message transmission on the mobile telephony network.

Particularly again, the user terminal comprises a connector for data transmission.

These and other objects and advantages of the present invention will become apparent after considering the following detailed specification of preferred embodiments in conjunction with the accompanying drawings wherein:
- FIG. 1 is a schematic view of a system implementing the invention;
- FIGS. 2 to 7 show different possible embodiments of a user terminal according to the invention.

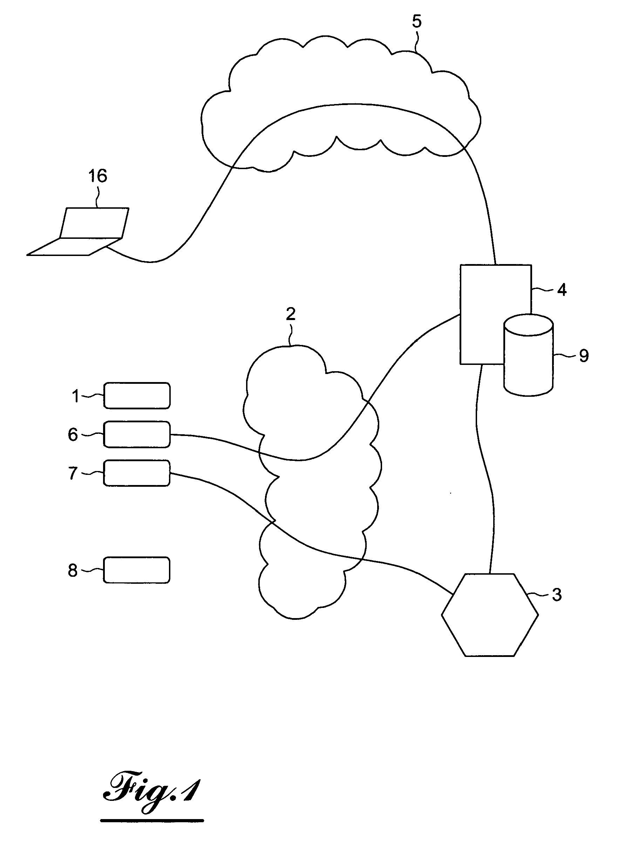

The system illustrated by FIG. 1, comprises a mobile telephony network 2 and a service terminal 4, which is connected to the mobile telephony network. More generally, the mobile telephony network 2 is any type of wireless network comprising GSM, GPRS, EDGE, 3G, HSDPA or any other type, which makes possible to transmit and receive voice or data. The service terminal 4 is for instance a computer, particularly a server in stand alone, a server connected to a call centre 3 or a telephone switch of the call centre 3. Particularly in the last case, the service terminal 4 can establish a direct communication between the user terminal and a human being or call centre agent of the call centre for allowing the call centre agent to hear the user or at least to hear the surroundings of the user terminal.

One or more user terminals 1, 6, 7, 8 are arranged to be connected with and only with the service terminal 4 through the mobile telephony network 2. In that way, each user terminal 1, 6, 7, 8, which does not necessitate to dial a telephone number or to type or select an URL (Uniform Resource Locator) makes possible a user friendly communication. When a connection is established by a call or a request from the user terminal, it is targeting the service terminal 4. A connection can also be established by a call or a request from the service terminal to the user terminal. When the user terminal receives a call, this call can only be originated by the service terminal.

For example, the user terminal 1, 6, 7, 8 is internally wired to establish a connection through the mobile telephony network 2 by using only a unique destination address, which relates to the service terminal 4 and which is stored in the user terminal. More precisely, the unique destination address is a telephone number of the service terminal or a set of telephone numbers of the service terminal or of replications of the service terminal for making possible to automatically select another telephone number by round-robin scheduling or other scheduling when a connection attempt fails. The telephone number may or may not be replaced or complemented by an URL or a fixed IP address in the case of a GPRS, a 3G or higher network, here again automatically selected. The unique destination address is stored in a ROM (Read Only Memory) when the unique destination address is determined before sale in factory or in a PROM (Programmable Read Only Memory) when the unique destination address is determined after sale.

For example again, the user terminals 1, 6, 7, 8 are internally wired to accept a connection or a call through the mobile telephony network 2 by verifying a unique emitting address, a password or a public key, which authenticate the origin of the call as the service terminal.

The user terminal may comprise a battery for a stand-alone use and/or a plug for receiving energy from a base when the user terminal is used at home, in a car or in combination with another apparatus, which has its own energy source.

The configuration of the user terminal is specific for an intended service to be provided by the system.

When the intended service is for example a voice service, the user terminal comprises an input for receiving sound and an electronic circuit for transmitting a short oral message to the service terminal 4. According to an implementation, the input is a microphone, which is integrated in the user terminal. According to another implementation, the input is a link to an independent device arranged for capturing sound for example in a micro-computer or in a car. The link can be wired or wireless for example using WiFi or Bluetooth. The electronic circuit for transmitting the short oral message is for example an ASIC, a FPGA or a microprocessor associated with a local memory comprising a program with communication instructions.

When, more specifically, the voice service is a group communication service, the service terminal 4 is arranged to be connected to any one of the user terminals 1, 6, 7, 8 of the system. The service terminal further comprises a program for transmitting the short oral message (SOM), which stems for example from a first user terminal 1, to the user terminals 6, 7 pertaining to a same group. When the group includes the first user terminal 1, the service terminal preferably transmits the SOM to all user terminals of the group except to the first user terminal.

Advantageously, the service terminal 4 has access to a database 9 wherein the group or the groups of user terminals 6, 7 in relation with the user terminal 1, is or are registered, each pointing to its telephone number or another identifying number on the network 2. Possibly, a history of the messages can be also recorded in the profile of the user.

The user terminals have preferably a loudspeaker available for giving out the oral message. The loudspeaker can be integrated in the user terminal or can be an independent loudspeaker for example of a car audio device or of an audio system at home, which is made available through a wired or a wireless link.

Independently or in combination with the loudspeaker, the user terminals dedicated to the group communication service may comprise a local memory wherein the short oral message can be stored to be heard later by the user of the user terminal. The SOM can be stored also in a data structure 9, which is hosted in a central memory managed by the service terminal 4.

When, more specifically, the voice service is a concierge service, the service terminal 4 is arranged to be connected to a call centre 3 for a call centre agent to handle the short oral message. The service terminal 4 can be in this case a switch or a server of the call centre 3.

The user terminal 1 is used for recording a voice service request. The voice service request is transmitted in a SOM to the call centre 3 for handling it. The service terminal 4 comprises a central memory storing a data structure 9 indexed by an identifier of the user terminal 1 wherefrom the short oral message is received. By handling the SOM, the SOM is registered in the data structure and the requested service is executed.

By registering the voice service request in the data structure 9, an acknowledgement is transmitted from the call centre 3 to the user terminal 1, including a reference of registration. Later on, a status of the service request is transmitted to the user terminal.

In a preferred embodiment, the data structure 9 comprises a profile associated with a user of the user terminal 1. The profile of the user comprises for example a list of relation contacts or favourites associated each with a list of relevant events including appointments, meeting dates, birthdays and so on. The profile of the user possibly comprises for example, data relating to the user including medical, professional or hobby data. When the call centre receives a service request, for example "call Fred for putting back the today's appointment tomorrow at the same time". By displaying automatically the profile of the user in front of the call centre agent receiving the request, the call centre agent can access to the name and address of Fred in the profile for asking him to put back the appointment.

When the intended service is for example a location based service, the user terminal 1, 6, 7, 8 comprises means of geographic location like for example a GPS device or a cellular tracking device of the mobile telephony network 2.

The location based service is for example an emergency aid service reporting the geographical coordinates of the user terminal in real time to the service terminal 4. The service terminal 4 comprises a program for locating the user of the user terminal around the clock. The user terminal comprises a sensor, which triggers a recording of the surrounding sounds and an emergency connection when the sensor detects a signal. The recorded sounds are dispatched to the members of a community associated with a communication group or transmitted to the call centre to set a call agent on the line for human assistance.

When the intended service is for example a data memorising or storage service, the user terminal 1, 6, 7, 8 comprises an input for receiving a data file and an electronic circuit for transmitting the data file to the service terminal 4. The input for receiving data is typically a USB (Universal Serial Bus) connector to be plugged in a USB socket of any micro-computer. The user terminal 1, 6, 7, 8 comprises a local memory for storing the data file, which is typically a flash memory like in a usual USB memory key.

Thanks to the transmission electronic circuit of the user terminal, each received data file is stored both in the local memory of the user terminal and in the central memory of the service terminal 4. Again, the storage in the local memory can be partial, for example in the case where the size of the file happens to be greater than the size of the local memory.

In its simplest version the user terminal has the same external aspect as a usual USB memory key without any interface. In that case, the electronic circuit is programmed for automatically transmitting the data file in a message to the service terminal 4 when storing the data file in the local memory and the service terminal 4 comprises a central memory for storing the data file in association with the user terminal 1, 6, 7, 8. The transmission of the data file is triggered by the storage in the local memory immediately or later according to the availability of the network 2.

The data storage service according to the invention has many advantages.

One of the advantages is in the security of the storage, which resists to the loss of USB memory key.

Another advantage is in the storage capacity, which is not limited by the size of the local memory but only by the allocated memory space in the central memory of the service terminal 4.

In a preferred embodiment of the system according to the invention, a communication device 6 has a link to the service terminal 4 and a dialog interface for allowing a user to access and/or to modify data relating to one or more of the user terminals 1, 6, 7, 8 in the service terminal 4. The communication device 6 may be a console comprising a display and a keyboard directly plugged to the service terminal 4. The communication device 6 is advantageously a micro-computer or a mobile station with IP connectivity for establishing the link to the service terminal 4 by a digital network 5, particularly by the Internet. The person who is allowed to access and/or to modify data in the service terminal 4, maybe according to setting rules the user of the user terminal, an administrator of the system or a relative.

As part of the data storage service, the allowed person can for example access to the data file, which is stored in the central memory of the service terminal 4 as a replication of the data file, which is stored in the local memory of the user terminal. For sake of security, standard secured access on the Internet are provided with authentication of the user.

As part of the group communication service, the allowed person can for example build a communication group by adding or deleting user terminals identification numbers in the profile associated with her or his user terminal.

As part of the concierge service, the allowed person can for example complete the profile of the user with new contacts, appointments or other personal data.

The user terminal 1, 6, 7, 8 has a small size like for example of a watch or a USB key. Contrarily to a mobile phone, the interface of the user terminal is extremely bare or inexistent. The user terminal is specifically dedicated to one intended service or to a predetermined combination of intended services and comprises therefore the sole components, which are necessary for the predetermined intended service or services. The aspect of the user terminal can possibly indicate the intended service implemented by the user terminal.

Basically, the user terminal simply comprises a sensor, which triggers the unique possible connection when the sensor detects a signal.

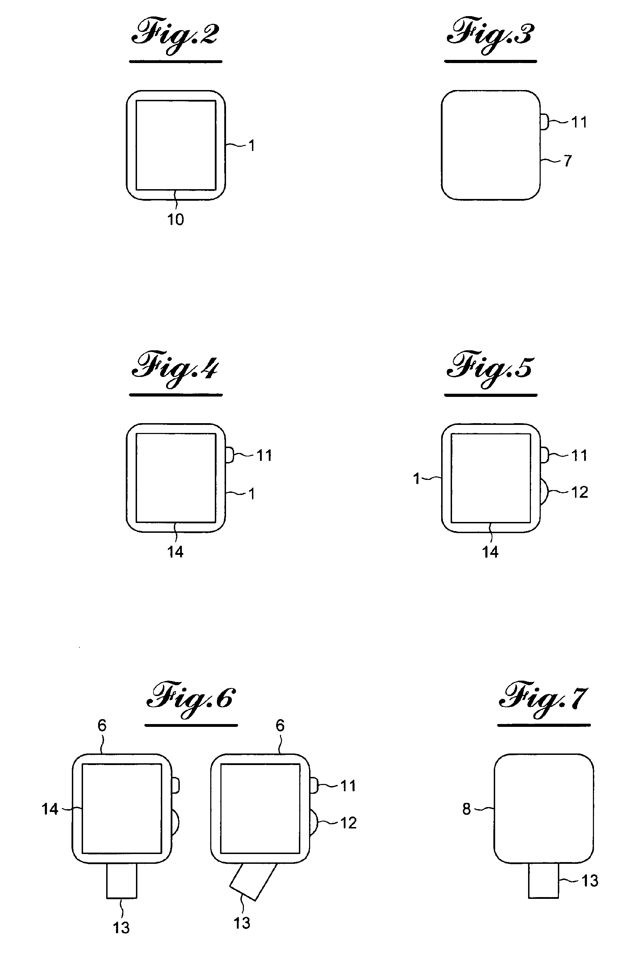

Figures 2 to 6 show user terminals 1, 6 having a hardware sensor. Figure 7 shows a user terminal 8 having a software sensor.

The user terminal 1 illustrated by Fig. 2, comprises only a touch screen 10 to display information in relation with a content or a message transmission on the mobile telephony network 2.

As part of the group communication service, the touch screen 10 displays a small number of lines, each corresponding to a community group or to a person of a community group. For example, a light contact of a finger with a motion on the screen 10 can shift the lines upward or downward of the screen according to the motion of the finger. A stronger or persisting motionless pressure of the finger on a line is detected by a sensor of the sensitive touch screen, which triggers a recording of sound and a connection to the service terminal 4 for sending a short oral message containing the reference of the group indicated by the pressed line on the screen 10 and the recorded sound.

As part of the concierge service, the touch screen 10 displays also a small number of lines, each corresponding to a type of request comprising for instance an already submitted request with its status, a possible preformatted or an unformatted request to submit. For example again, a light contact of a finger with a motion on the screen 10 can shift the lines upward or downward of the screen according to the motion of the finger. A stronger or persisting motionless pressure of the finger on a line or anywhere on the screen is detected by a sensor of the sensitive touch screen, which triggers a connection to the service terminal 4 for sending a request to the call centre.

The user terminal 7 illustrated by Fig. 3, comprises only a switch 11 for easier use. The switch 11 is the sensor, which triggers the connection by detecting a push pressure on it.

As part of the group communication service, the user terminal 7 refers always to a same communication group.

As part of the emergency aid service, a simple push on the switch 11 set the call agent on the line for a dialog with the user of the user terminal 7.

The user terminal 1 illustrated by Fig. 4, comprises only a simple screen 14, which is not a touch screen and the switch 11.

As part of the concierge service, the screen 14 displays for example only the status of the last submitted requests and a new request is submitted by pressing the switch 11.

As part of the emergency aid service, after a simple push on the switch 11 setting the call agent on the line for assistance, the screen displays for example a short text designing a medicament or an apparatus.

The user terminal 1 illustrated by Fig. 5, comprises the simple screen 14, the switch 11 and a thumbwheel 12. The user terminal 1 illustrated in Fig. 5 provides the same functionalities as the user terminal 1 illustrated in Fig. 2. A rotation of the thumbwheel 12 shifts upward or downward the lines on the screen 14. A pressure on the switch 11 triggers the connection with the service terminal 4.

The user terminal 6 illustrated by Fig. 6, comprises a connector 13 for data transmission. The connector 13 is particularly a USB plug to be inserted in the USB socket of a micro-computer for downloading a data file from the micro-computer into the local memory of the user terminal 6. On the left side of Fig. 6, the connector 13 is in a position ready to be inserted in a USB socket. We can see on the right side of Fig. 6 that the connector 13 can be turned inside the user terminal 6. In another mode of implementation, the connector 13 is retractile for packing up.

As part of the data storage service, the screen 14 of the user terminal 6 is used in combination with the thumbwheel 12 for displaying a scrollable list of the data file names actually stored in the user terminal 6. This arrangement makes possible to designate a data file or a directory, which will be the sole visible object by inserting the user terminal 6 as a USB key in the micro-computer. In that manner, it is possible to communicate documents to third parties without possibility for them to see the exact content of the key. Each stored data file is transmitted to the server by pressing the switch 11.

The user terminal 8 illustrated by Fig. 7, comprises only the connector 13 for data transmission. The aspect of the user terminal 8 is the one of a usual USB key. The data files are automatically transmitted to the service terminal 4 according to predefined rules like for example, each time a data file is stored or modified in the local memory of the user terminal 8, periodically at predetermined time or after having stored a predetermined volume of data. The sensor is here a software test on a writing instruction, on a memory threshold or on a clock register.

Other embodiments, uses and advantages of the present invention will be apparent to those skilled in the art from consideration of the specification and practice of the invention disclosed herein. The specification and examples should be considered exemplary only. The intended scope of the invention is only limited by the claims appended hereto.

Particularly, other than above described services can be developed using the system according to the invention. Particularly also, above described services and/or other than above described services can be developed using the system according to the invention wherein a service terminal 4 can emit or receive data to or from user terminals 1, 6, 7, 8 and/or using the user terminal according to the invention being internally wired to receive a connection through the network 2 from a service terminal 4 and from the service terminal 4 only.

## Claims

1. A system for user friendly communication, comprising:
- a mobile telephony network (2);
- a service terminal (4), which is connected to the mobile telephony network; and
- at least one user terminal (1, 6, 7, 8) arranged to be connected with and only with the service terminal (4) through the mobile telephony network.

2. The system according to Claim 1, wherein at least one first user terminal (1) comprises an input for receiving sound and an electronic circuit for transmitting a short oral message to the service terminal (4).

3. The system according to Claim 2, wherein the service terminal (4) is arranged to be connected to any one of the user terminals (1, 6, 7, 8) of the system and comprises a program for transmitting the short oral message to at least one second user terminal (6, 7) pertaining to a group including the first user terminal (1).

4. The system according to Claim 3, wherein the first and/or the second user terminal (1, 6, 7) comprises a local memory for storing the oral message.

5. The system according to Claim 3, wherein the first and/or the second user terminal (1, 6, 7) has a loudspeaker available for giving out the oral message.

6. The system according to Claim 2, wherein the service terminal (4) is arranged to be connected to a call centre (3) for a call centre agent to handle the short oral message.

7. The system according to Claim 6, wherein the service terminal (4) comprises a central memory storing a data structure indexed by an identifier of the user terminal (1) wherefrom the short oral message is received.

8. The system according to Claim 7, wherein the data structure comprises a profile associated with at least one user of the user terminal (1).

9. The system according to Claim 1, wherein the user terminal (1, 6, 7, 8) comprises an input for receiving a data file and an electronic circuit for transmitting the data file to the service terminal (4).

10. The system according to Claim 9, wherein the user terminal (1, 6, 7, 8) comprises a local memory for storing the data file.

11. The system according to Claim 10, wherein the electronic circuit is programmed for automatically transmitting the data file in a message to the service terminal (4) after storing the data file in the local memory and the service terminal (4) comprises a central memory for storing the data file in association with the user terminal (1, 6, 7, 8).

12. The system according to anyone of preceding claims, comprising a communication device (6) including a link to the service terminal (4) and a dialog interface for allowing a user to access and/or to modify data relating to the user terminal in the service terminal (4).

13. The system according to anyone of preceding claims, wherein the service terminal (4) can emit or receive data to or from user terminals (1, 6, 7, 8).

14. A user terminal (1, 6, 7, 8) to be used in the system comprising a mobile telephony network (2) and a service terminal (4) according to anyone of Claims 1 to 13, comprising a unique destination address, which relates to the service terminal (4), and being internally wired to establish a connection through the mobile telephony network (2) by using said and only said unique destination address.

15. The user terminal according to Claim 14, comprising a sensor, which triggers the connection when the sensor detects a signal.

16. The user terminal according to Claim 14 or 15, comprising a screen to display information in relation with a content or a message transmission on the mobile telephony network (2).

17. The user terminal according to anyone of Claims 14 to 16, comprising a connector for data transmission.

18. The user terminal according to anyone of Claims 14 to 17, being internally wired to accept a connection through the network (2) from the service terminal (4) and from said service terminal (4) only.
